# EUROPÄISCHE PATENTANMELDUNG

(11) **EP 1 215 865 A2**
(43) Veröffentlichungstag der Anmeldung: **19.06.2002**
(21) Anmeldenummer: 01000717.7
(22) Anmeldetag: 06.12.2001
(51) Int. Cl.: H04L 29/06, H04L 29/12

(54) **Netzwerk mit einem Lokalisierungsmanagement**

(30) Priorität: 13.12.2000 DE 10061958
(71) Anmelder: Philips Corporate Intellectual Property GmbH, 52066 Aachen (DE); Koninklijke Philips Electronics N.V., 5621 BA Eindhoven (NL)
(72) Erfinder: Duque-Antón, Manuel, 52066, Aachen (DE); Du, Yonggang, 52066, Aachen (DE); Falck, Thomas, Aachen, 52066 (DE); Stahl, Martin, Aachen, 52066 (DE)
(74) Vertreter: Volmer, Georg, Dipl.-Ing.

(57) **Zusammenfassung**

Die Erfindung bezieht sich auf ein Netzwerk mit mehreren Vermittlungsvorrichtungen, die jeweils zu Sub-Netzwerken zusammengefasst sind und mit festen Terminals oder über Basisstationen mit mobilen Terminals gekoppelt sind. Jede Vermittlungsvorrichtung enthält für den Verbindungsaufbau von einem Terminal zu einem mobilen Terminal wenigstens eine Tabelle, die eine Zuordnung der Heimatadresse eines mobilen Terminals zu seiner Besuchsadresse und zum Sub-Netzwerk der dem mobilen Terminal zugeordneten Vermittlungsvorrichtung aufweist.

## Beschreibung

Die Erfindung bezieht sich auf ein Netzwerk mit mehreren Sub-Netzwerken, die jeweils mehrere Vermittlungsvorrichtungen zum Austausch von Nachrichten mit gekoppelten festen oder mobilen Terminals. Als Lokalisierungsmanagement in einem solchen Netzwerk wird die Suche eines Terminals nach einem hauptsächlich mobilen Terminals bezeichnet, mit dem eine Verbindung aufgebaut werden soll.

Ein solches Netzwerk mit einem Lokalisierungsmanagement ist aus "Arup Archarya, Jun Li, Furquan Ansari und Dipankar Raychaudhuri: Mobility Support for IP over Wireless ATM, IEEE Communications Magazine, April 1998, Seiten 84 bis 88" bekannt. Hierbei versucht ein Terminal zuerst eine Verbindung zur Heimat-Vermittlungsvorrichtung eines mobilen Terminals aufzubauen. Falls das Terminal sich jedoch nicht bei seiner Heimat-Vermittlungsvorrichtung befindet, wird die Verbindung wieder abgebaut und eine komplett neue Verbindung zur Besuchs-Vermittlungsvorrichtung und damit zum mobilen Terminal aufgebaut.

Der Erfindung liegt die Aufgabe zugrunde, ein Netzwerk zu schaffen, mit dem der Verbindungsaufbau beschleunigt wird.

Die Aufgabe wird dadurch gelöst, dass das Netzwerk mehrere Vermittlungsvorrichtungen enthält, die
- jeweils zu Sub-Netzwerken zusammengefasst sind,
- mit festen Terminals oder über Basisstationen mit mobilen Terminals gekoppelt sind und
- jeweils für den Verbindungsaufbau von einem Terminal zu einem mobilen Terminal wenigstens eine Tabelle enthalten, die eine Zuordnung der Heimatadresse eines mobilen Terminals zu seiner Besuchsadresse und zum Sub-Netzwerk der dem mobilen Terminal zugeordneten Vermittlungsvorrichtung aufweist.

Erfindungsgemäß wird das Netzwerk in Sub-Netzwerke eingeteilt, die jeweils eine Gruppe von Vermittlungsvorrichtungen enthalten. Jede Vermittlungsvorrichtung enthält eine Tabelle, die außer Heimatadressen und Besuchsadressen eine Zuordnung enthält, welche Vermittlungsvorrichtungen Bestandteil des Sub-Netzwerkes sind. Eine solche Zuordnung kann über eine Sub-Netzwerk-Identifizierung erfolgen, die ein Sub-Netzwerk kennzeichnet. Die Tabelle einer Vermittlungsvorrichtung enthält dann eine Zuordnung wenigstens aller einer Sub-Netzwerk-Identifizierung zugeordneten Vermittlungsvorrichtungen. Aufgrund dieser Sub-Netzwerk-Identifizierung kann ein vereinfachter und beschleunigter Verbindungsaufbau durchgeführt werden.

Im Anspruch 3 ist die Zusammensetzung einer Heimat- oder Besuchsadresse beschrieben, die aus einer Netzwerkinformation (Identifizierung einer Heimat- oder Besuchs-Vermittlungsvorrichtung) und einer Terminalinformation (Identifizierung eines Terminals) besteht.

In den Ansprüchen 4 und 6 sind jeweils die beiden Varianten eines vereinfachten Verbindungsaufbaus angegeben. Es wird dabei eine erste vorläufige Verbindung zu der zuerst erreichbaren Vermittlungsstelle eines Sub-Netzwerkes und dann eine zweite vorläufige Verbindung zu einer Vermittlungsvorrichtung aufgebaut.

Bei der ersten Variante wird zuerst eine vorläufige Verbindung zur Heimat-Vermittlungsvorrichtung aufgebaut. Falls die Heimatadresse des mobilen Terminals nicht seiner momentanen Besuchsadresse entspricht, wird die zweite vorläufige Verbindung abgebaut und eine zur Besuchs-Vermittlungsvorrichtung erstellt. Die Beschleunigung ergibt sich also dadurch, dass die vorläufige Verbindung bei unterschiedlicher Heimat- und Besuchsadresse nicht vollständig wieder abgebaut werden muss.

Bei der zweiten Variante wird keine Verbindung zur Heimat-Vermittlungsvorrichtung aufgebaut, falls eine unterschiedlicher Heimat- und Besuchsadresse vorliegt. Dies ist dadurch möglich, weil jede Vermittlungsvorrichtung eines Sub-Netzwerkes eine Besuchs-Tabelle mit einer Zuordnung über die momentanen Besuchsadressen aller dem Sub-Netzwerk zugeordneten mobilen Terminals enthält. Die zweite vorläufige Verbindung wird zur Besuchs-Vermittlungsvorrichtung aufgebaut, falls die erste erreichbare Vermittlungsvorrichtung aus seiner Besuchs-Tabelle entnimmt, dass das mobile Terminal eine Vermittlungsvorrichtung des Heimat-Sub-Netzwerkes besucht.

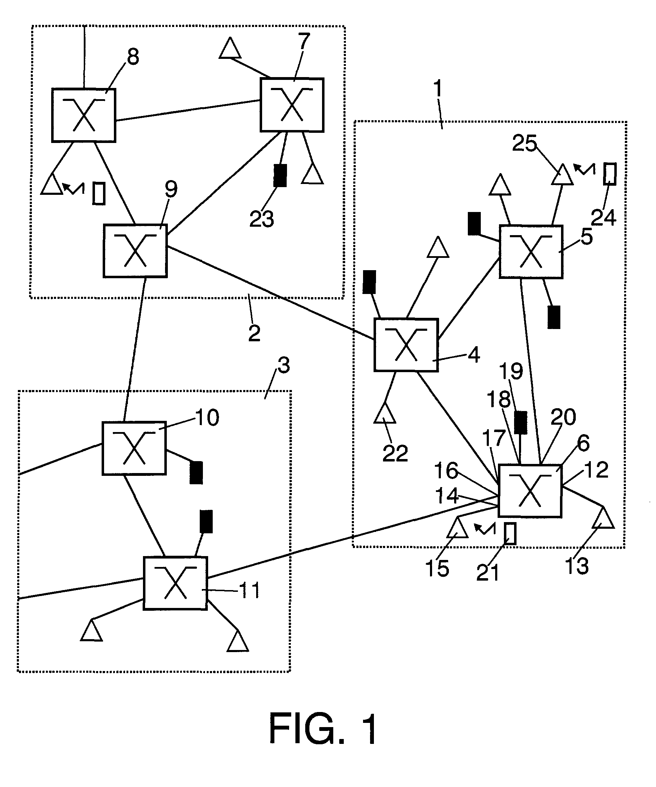

Ausführungsbeispiele der Erfindung werden nachstehend anhand der Fig 1 näher erläutert, die ein Netzwerk mit mehreren Sub-Netzwerken zeigt.

Das in Fig 1 dargestellte Netzwerk zeigt mehrere Sub-Netzwerke 1 bis 3 mit mehreren Vermittlungsvorrichtungen (switches). Das Sub-Netzwerk 1 enthält die Vermittlungsvorrichtungen 4 bis 6, das Sub-Netzwerk 2 die Vermittlungsvorrichtungen 7 bis 9 und das Sub-Netzwerk 3 die Vermittlungsvorrichtungen 10 und 11. Ein Sub-Netzwerk 1 bis 3 kann beispielsweise ein Firmen-Netzwerk mit jeweils einer Vermittlungsvorrichtung in einem Gebäude sein. Jede Vermittlungsvorrichtungen ist über Zugangspunkte oder Ports mit einer anderen Vermittlungsvorrichtung, einer Basisstation oder einem festen bzw. nicht mobilem Terminal gekoppelt. Die Zugangspunkte oder Ports stellen Ein- und Ausgänge einer Vermittlungsvorrichtung dar. Beispielsweise weist die Vermittlungsvorrichtung 6 sechs Zugangspunkte auf. Der Zugangspunkt 12 ist mit einer Basisstation 13, der Zugangspunkt 14 mit einer Basisstation 15, der Zugangspunkt 16 mit der Vermittlungsvorrichtung 11, der Zugangspunkt 17 mit der Vermittlungsvorrichtung 4, der Zugangspunkt 18 mit einem festen Terminal 19 und der Zugangspunkt 20 mit der Vermittlungsvorrichtung 5 gekoppelt. Die Basisstation 15 tauscht mit einem mobilen Terminal 21 über den Funkweg Daten bzw. Nachrichten aus.

Das Netzwerk kann ein nach dem asynchronen Transfermodus (ATM) arbeitendes Kommunikationssystem sein, das sich für alle Dienste eignet, z.B. zur Sprachübertragung, zur Verteilung von Videosignalen und zur Datenkommunikation. Die mit Hilfe des asynchronen Transfermodus zu übertragenden Nachrichten oder Informationen werden in Pakete gleicher Länge (Zellen) gepackt, wodurch das Kommunikationssystem nur gleichartige Pakete unabhängig von dem verwendeten Dienst oder der Applikation überträgt. Eine Zelle enthält ein Kopffeld mit 5 Byte, das Wege- und Steuerinformationen enthält, und ein Informationsfeld mit 48 Byte, das Daten enthält.

Mittels einer Signalisierung wird vor dem Nachrichten- oder Informationstransfer (Datentransfer) eine virtuelle Verbindung aufgebaut und nach Beendigung des Datentransfers wieder abgebaut. Dabei wird zwischen dem Terminal (user side) und dem Netzwerk (network side) eine Vereinbarung über die gewünschten Übertragungseigenschaften, wie Bandbreite, Fehlerrate und Laufzeit getroffen.

Die Festlegung, wie die Benutzerseite (Terminal) und die Netzwerkseite miteinander Daten austauschen und wie diese verarbeitet werden, wird durch eine Schnittstellendefinition getroffen. Die Schnittstelle zwischen Terminal und Netzwerk wird als "User to Network Interface", kurz UNI, bezeichnet. Hierbei wird das von der ITU standardisierte Verfahren Q.2931 verwendet. Die Schnittstelle zwischen zwei Vermittlungsvorrichtungen oder auch zwei Netzwerken wird als "Network to Network Interface", kurz NNI, bezeichnet.

Zur Übertragung der Signalisierungsinformationen werden Zellen verwendet, die als Kontrollzellen bezeichnet werden. Nach einem Verbindungsaufbau, wenn für die Übertragung zwischen zwei Terminals ein virtueller Kanal zur Verfügung gestellt worden ist, werden die Nutzdaten über Zellen transportiert, die als Nutzzellen bezeichnet werden. Die beiden Zellarten können über eine bestimmte Information im Kopffeld einer Zelle unterschieden werden. Die beiden unterschiedlichen Daten - einerseits Signalisierungsdaten und andererseits Nutzdaten - werden in einem Terminal und einer Vermittlungsvorrichtung unterschiedlich weitergeleitet oder kanalisiert. Somit kann ein ATM-Nutzkanal für den Transport von Nutzdaten und ein ATM-Signalisierungskanal für den Transport von Signalisierungsdaten definiert werden.

Jedes feste oder mobile Terminal weist eine eindeutige Adresse auf, durch die es sich im Netzwerk von den anderen Terminals unterscheidet. Diese Adresse kann beispielsweise aus 20 Byte bestehen, von denen 13 Byte das Netzwerk und 7 Byte das Terminal identifizieren, und kennzeichnet den Ort, an dem sich das Terminal im Netzwerk befindet. Der auf das Netzwerk bezogene Teil kann beispielsweise eine Identifizierung für eine Vermittlungsvorrichtung sein. Im folgenden wird die Identifizierung für eine Vermittlungsstelle mit SID(i), i = 0, 1, 2, ..., und eine Identifizierung für ein Terminal mit AID(n), n = 0, 1, 2, ..., bezeichnet. Das feste Terminal 19 kann die Adresse SID(6).AID(19) und das mobile Terminal 21 die Adresse SID(6).AID(21) aufweisen. SID(6) ist dann die Identifizierung für die Vermittlungsvorrichtung 6, AID(19) die Identifizierung für das feste Terminal 19 und AID(21) die Identifizierung für das mobile Terminal 21. Die Adresse SID(6).AID(21) gibt also an, dass das Terminal 21 mit der Identifizierung AID(21) der Vermittlungsstelle 6 zugeordnet ist.

Bei den mobilen Terminals muss noch zwischen einer statischen Heimatadresse und einer dynamischen Besuchsadresse unterschieden werden. Beispielsweise ist die Adresse SID(6).AID(21) die Heimatadresse des mobilen Terminals 21. Befindet sich das Terminal 21 im Gebiet der Vermittlungsvorrichtung 4, ist also über eine der mit der Vermittlungsstelle 4 gekoppelten Basisstation 22 verbunden, weist das Terminal 21 mit der Heimatadresse SID(6).AID(21) die Besuchsadresse SID(4).AID(21) auf.

Erfindungsgemäß wird noch eine Sub-Netzwerk-Identifizierung NID(k), k = 0, 1, 2, ..., eingeführt, die ein Sub-Netzwerk und damit eine Gruppe von Vermittlungsvorrichtungen kennzeichnet. Eine solche Sub-Netzwerk-Identiftzierung ist insbesondere für die mobilen Terminals vorteilhaft, um auf einfache Weise mit einem mobilen Terminal einen Verbindungsaufbau zu bewerkstelligen. Einem mobilen Terminal ist somit auch ein Heimat-Sub-Netzwerk mit einer bestimmten Sub-Netzwerk-Identifizierung NID(k) zugeordnet.

Wenn ein Terminal eine Verbindung zu einem mobilen Terminal herzustellen versucht, wird zuerst die Heimat-Adresse verwendet, um die Verbindung aufzubauen. Das Terminal baut dabei zuerst einen sogenannten ersten Sub-Pfad bis zu der ersten Vermittlungsvorrichtung des Heimat-Sub-Netzwerkes des mobilen Terminals auf, wenn das Terminal, welches eine Verbindung mit dem mobilen Terminal wünscht, außerhalb des Heimat-Sub-Netzwerkes des mobilen Terminals liegt. Unter einem Sub-Pfad ist eine noch nicht festgelegte oder vorläufige Verbindung zu verstehen. Von dieser ersten Vermittlungsvorrichtung wird dann ein zweiter Sub-Pfad zur Heimat-Vermittlungsvorrichtung des mobilen Terminals erweitert.

Wenn die momentane Besuchsadresse des mobilen Terminals nicht seiner Heimatadresse entspricht, wird der zweite Sub-Pfad freigegeben. Falls die Besuchsadresse des mobilen Terminals dem Heimat-Sub-Netzwerk zugeordnet ist (wird anhand der Sub-Netzwerk-Identifizierung festgestellt), das mobile Terminal sich also im Heimat-Sub-Netzwerk befindet, wird der zweite Sub-Pfad zu der von dem mobilen Terminal besuchten Vermittlungsvorrichtung hergestellt. Nach erfolgreicher Akzeptanz durch das mobile Terminal werden beide Sub-Pfade zu einem Pfad verbunden, d.h. der Verbindungsaufbau ist abgeschlossen. Nur in dem Fall, wenn die Besuchs-Adresse nicht dem Heimat-Sub-Netzwerk zugeordnet ist, wird der erste Sub-Pfad freigegeben und ein neuer erster Pfad zu der Vermittlungsvorrichtung hergestellt, die das mobile Terminal gerade besucht.

Dieser Verbindungsaufbau kann mit folgendem Beispiel verdeutlicht werden. Ein festes Terminal 23, welches mit der Vermittlungsvorrichtung 7 im Sub-Netzwerk 2 gekoppelt ist, möchte mit einem mobilen Terminal 24, das mit der Vermittlungsvorrichtung 5 des Sub-Netzwerkes 1 über eine Basisstation 25 gekoppelt ist, eine Verbindung aufbauen. Das Terminal 24 besitze in diesem Beispiel die Heimatadresse SID(6).AID(24) und die momentane Besuchsadresse SID(5).AID(24). Sowohl die Heimatadresse als auch die Besuchsadresse sind dem Sub-Netzwerk 1 zugeordnet. Die Sub-Netzwerk-Identifizierung ist sowohl für die Heimatadresse als auch für die Besuchsadresse gleich NID(1). Es wird zuerst ein erster Sub-Pfad von dem festen Terminal 23 über die Vermittlungsvorrichtungen 7 und 9 zu der Vermittlungsvorrichtung 4 des Sub-Netzwerkes 1 hergestellt.

Die Vermittlungsvorrichtung 4 stellt fest, dass sowohl sie selbst als auch die Heimat-Vermittlungsvorrichtung demselben Heimat-Sub-Netzwerk zugeordnet sind, und baut dann einen zweiten Sub-Pfad zur Heimat-Vermittlungsvorrichtung 6 des mobilen Terminals 24 auf. Die Vermittlungsvorrichtung 6 stellt jedoch fest, dass die Heimatadresse des mobilen Terminals 24 momentan nicht der Besuchsadresse entspricht. Dies wird der Vermittlungsvorrichtung 4 mitgeteilt, die dann den zweiten Sub-Pfad wieder abbaut und einen zweiten Sub-Pfad zur Vermittlungsvorrichtung 5 aufbaut. Die Vermittlungsvorrichtung 5 ist derzeit die vom mobilen Terminal 24 besuchte Vermittlungsvorrichtung Dadurch dass die Vermittlungsvorrichtungen 4, 5 und 6 alle dieselbe Sub-Netzwerk-Identifizierung NID(1) haben, muss nur der zweite Sub-Pfad und nicht der erste Sub-Pfad wieder neu aufgebaut werden.

Damit die oben beschriebenen Sub-Pfade auf- und abgebaut werden können, enthalten die Vermittlungsvorrichtungen verschiedene Funktionen und Tabellen (bzw. Speicher), die im folgenden erläutert werden.

Jede Vermittlungsvorrichtung enthält eine Funktion, die Vermittlungsvorrichtungen auf die Sub-Netzwerke abbildet. Das wird beispielsweise mit einer Sub-Netzwerk-Tabelle realisiert, die zumindest eine Auflistung aller einem Sub-Netzwerk zugeordneter Vermittlungsvorrichtungen enthält. Bei einem Verbindungsaufbau stellt eine Vermittlungsvorrichtung dann fest, ob die Vermittlungsvorrichtung, zu der eine Verbindung aufgebaut werden soll, Bestandteil des eigenen Sub-Netzwerkes (bzw. Heimat-Sub-Netzwerkes) ist

Um sicherzustellen, welche Vermittlungsvorrichtung ein mobiles Terminal momentan besucht, enthält jede Vermittlungsvorrichtung eine Besuchs-Tabelle. Diese Besuchs-Tabelle verweist von der Heimatadresse zu der momentanen Besuchsadresse eines mobilen Terminals. Die Tabelle kann auch Verweise von der Heimatadresse zur Besuchsadresse der mobilen Terminals aller Vermittlungsvorrichtungen seines Heimat-Sub-Netzwerkes haben. In diesem Fall kann der Verbindungsaufbau beschleunigt werden, weil immer eine Vermittlungsvorrichtung eines Sub-Netzwerkes Information über alle momentanen Besuchsadressen seines Heimat-Sub-Netzwerkes hat.

Wenn sich ein mobiles Terminal von einer Funkzelle zu einer anderen Funkzelle bewegt, die aber beide der gleichen Vermittlungsvorrichtung aber unterschiedlichen Basisstationen zugeordnet sind, wird dies als Intra-Vermittlungs-Handover bezeichnet. In einem solchen Fall wird weder die Besuchs-Tabelle noch die Sub-Netzwerk-Tabelle verändert. Allerdings werden hier nicht näher ausgeführte Routing-Tabellen, die für die Weiterleitung der ATM-Zellen (z.B. zu den Zugangspunkten) Informationen gespeichert haben, der Vermittlungsvorrichtung verändert.

Wenn sich ein mobiles Terminal von einer Funkzelle zu einer anderen Funkzelle bewegt, die aber unterschiedlichen Vermittlungsvorrichtungen und damit unterschiedlichen Basisstationen zugeordnet sind, wird dies als Inter-Vermittlungs-Handover bezeichnet. In diesem Fall verändert sich die Besuchsadresse eines mobilen Terminals. Daher ist es erforderlich, dass die Besuchs-Tabellen in den verschiedenen Vermittlungsvorrichtungen entsprechend angepasst werden. Auch Routing-Tabellen in den beiden unterschiedlichen Vermittlungsvorrichtungen müssen verändert werden.

Über diese Veränderung der Besuchsadresse kann entweder das mobile Terminal oder die Besuchs-Vermittlungsvorrichtung die Heimat-Vermittlungsvorrichtung des mobilen Terminals oder in dem Fall, dass alle Vermittlungsvorrichtungen eines Sub-Netzwerkes die Besuchsadressen aller mobilen Terminals gespeichert haben, alle Vermittlungsvorrichtungen des Sub-Netzwerkes informieren.

Intra-Netzwerk-Handover bedeutet, dass sich ein mobiles Terminal sich von einer Funkzelle zu einer Funkzelle bewegt, die zu einem anderen Sub-Netzwerk gehört. In diesem Fall sind ebenfalls die Besuchs-Tabellen zu ändern.

## Patentansprüche

1. Netzwerk mit mehreren Vermittlungsvorrichtungen, die
- jeweils zu Sub-Netzwerken zusammengefasst sind,
- mit festen Terminals oder über Basisstationen mit mobilen Terminals gekoppelt sind und
- jeweils für den Verbindungsaufbau von einem Terminal zu einem mobilen Terminal wenigstens eine Tabelle enthalten, die eine Zuordnung der Heimatadresse eines mobilen Terminals zu seiner Besuchsadresse und zum Sub-Netzwerk der dem mobilen Terminal zugeordneten Vermittlungsvorrichtung aufweist.

2. Netzwerk nach Anspruch 1,
**dadurch gekennzeichnet,**
**dass** eine Sub-Netzwerk-Identifizierung ein Sub-Netzwerk kennzeichnet und
**dass** eine Tabelle in einer Vermittlungsvorrichtung eine Zuordnung wenigstens aller einer Sub-Netzwerk-Identifizierung zugeordneten Vermittlungsvorrichtungen enthält.

3. Netzwerk nach Anspruch 1,
**dadurch gekennzeichnet,**
**dass** die Heimatadresse aus einer Identifizierung für eine einem Terminal zugeordneten Vermittlungsvorrichtung und einer Identifizierung für das Terminal zusammengesetzt ist und
**dass** die Besuchsadresse aus einer Identifizierung für eine momentan von einem mobilen Terminal besuchten Vermittlungsvorrichtung und einer Identifizierung für das mobile Terminal zusammengesetzt ist.

4. Netzwerk nach Anspruch 1,
**dadurch gekennzeichnet,**
**dass** bei einem Verbindungsaufbau eines Terminals mit einem mobilen Terminal zuerst ein Aufbau einer ersten vorläufigen Verbindung zu einer ersten Vermittlungsvorrichtung des Heimat-Sub-Netzwerks des mobilen Terminals und dann einer zweiten vorläufigen Verbindung zur Heimat-Vermittlungsvorrichtung des mobilen Terminals vorgesehen ist, dass falls die Heimatadresse des mobilen Terminals nicht seiner momentanen Besuchsadresse entspricht der Abbau der zweiten vorläufigen Verbindung und der Aufbau einer zweiten vorläufigen Verbindung zur Besuchs-Vermittlungsvorrichtung vorgesehen ist, falls das mobile Terminal eine Vermittlungsvorrichtung des Heimat-Sub-Netzwerkes besucht.

5. Netzwerk nach Anspruch 1,
**dadurch gekennzeichnet,**
**dass** jede Vermittlungsvorrichtung eines Sub-Netzwerkes eine Besuchs-Tabelle mit einer Zuordnung über die momentanen Besuchsadressen aller dem Sub-Netzwerk zugeordneten mobilen Terminals enthält.

6. Netzwerk nach Anspruch 5,
**dadurch gekennzeichnet,**
**dass** bei einem Verbindungsaufbau eines Terminals mit einem mobilen Terminal zuerst ein Aufbau einer ersten vorläufigen Verbindung zu einer ersten Vermittlungsvorrichtung des Heimat-Sub-Netzwerks des mobilen Terminals und dann der Aufbau einer zweiten vorläufigen Verbindung zur Besuchs-Vermittlungsvorrichtung vorgesehen ist, falls die erste Vermittlungsvorrichtung aus seiner Besuchs-Tabelle entnimmt, dass das mobile Terminal eine Vermittlungsvorrichtung des Heimat-Sub-Netzwerkes besucht.
